# EUROPEAN PATENT SPECIFICATION

(11) **EP 1 382 474 B1**
(45) Date of publication and mention of the grant of the patent: **08.11.2006**
(21) Application number: 03254462.9
(22) Date of filing: 16.07.2003
(51) Int. Cl.: B60J 10/00, B60J 10/06, B60J 10/08, B60J 10/04

(54) **Door weather strip and its installation structure**
Türdichtung und ihre Befestigungsweise
Joint d'étanchéité pour portes et sa structure d'installation

(30) Priority: 04.02.2003 JP 2003026706; 18.07.2002 JP 2002210076
(43) Date of publication of application: 21.01.2004
(73) Proprietor: Nishikawa Rubber Co., Ltd., Nishi-ku, Hiroshima-shi, Hiroshima-ken 733 (JP)
(72) Inventor: Arata, Mitsuaki, c/o Nishikawa Rubber Co. Ltd., Hiroshima-shi, Hiroshima-ken (JP); Hamanaka, Hitoshi, c/o Nishikawa Rubber Co. Ltd., Hiroshima-shi, Hiroshima-ken (JP); Okamoto, Kenji, c/o Takashimaya N. K. Co. Ltd., Toyota-shi, Aichi-ken (JP); Hisada, Yuji, c/o Takashimaya N. K. Co. Ltd., Toyota-shi, Aichi-ken (JP); Goto, Yasuhiro, c/o Takashimaya N. K. Co. Ltd., Toyota-shi, Aichi-ken (JP)
(74) Representative: Croston, David

(56) References cited:
- WO-A-01/34933
- US-A- 5 433 038
- US-A1- 2001 022 455
- US-A1- 2001 025 451

## Description

This invention relates to a door weather strip, which is installed in a door trim of a car making a resilient contact with a door glass, and an installation structure comprising the door weather strip.

As an installation structure of a door weather strip installed in a door trim of a car making a resilient contact with a door glass, there has been such a structure as disclosed in Japanese Patent Publication No. 3178325. A further installation structure is known from US 5 433 038, which represents the most relevant prior art. According to this structure, a weather strip is installed as it is inserted from one end of the door trim and is slid in the longitudinal direction of the door trim. In this structure, the installation operation is difficult since considerably high resistance is produced while sliding the weather strip in the door trim.

Further, among those insertion type of weather strips, there is a double-lip type door weather strip having a pillar structure in section. In an installation structure having such type of weather strip, the weather strip moves since it is often held when a door trim is handled, so that this structure requires ultrasound staking operations besides the insertion operation.

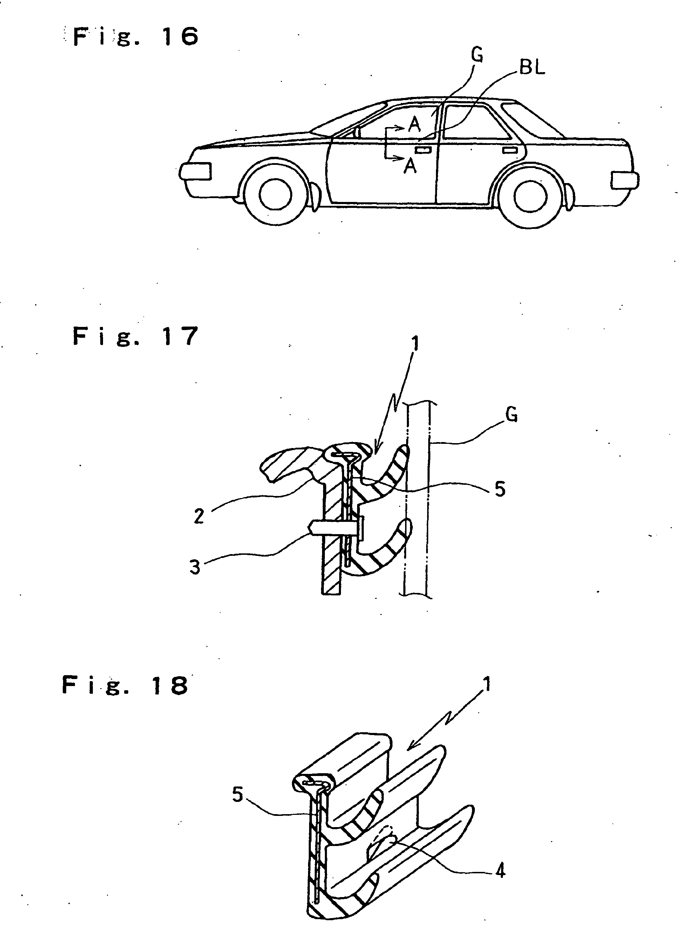

Further, as illustrated in Fig. 16 to 18, there has been an installation structure of a door weather strip where the door weather strip is directly installed in a door trim in a frontward direction from the outside of a car. Fig. 17 and 18 are enlarged sectional views along line A-A in Fig. 16 showing different types of installation structures.

The installation structure in Fig. 17 illustrates a type of structure in which the door weather strip 1 is fixed to a door trim 2 with a bolt 3, in which the weather strip 1 makes a resilient contact with a door glass G. The door trim 2 is furnished along the belt line BL of the car. The installation structure shown in Fig. 18 comprises a hook 4 instead of the bolt 3, and the hook 4 is engaged with the door trim 2.

However, in any of the above-mentioned installation structures, the door weather strip 1 does not have enough rigidity, so that each weather strip requires an embedded insert 5, and so there is a drawback that the door weather strip 1 becomes heavier. Further, there is another drawback that the production costs of the weather strip 1 and the installation structure increase as they need to comprise bolts 3 and the hooks 4. Moreover, since the weather strip 1 has to be furnished with the insert 5, there is a drawback that a car including such weather strip 1 is disadvantageous in recycling.

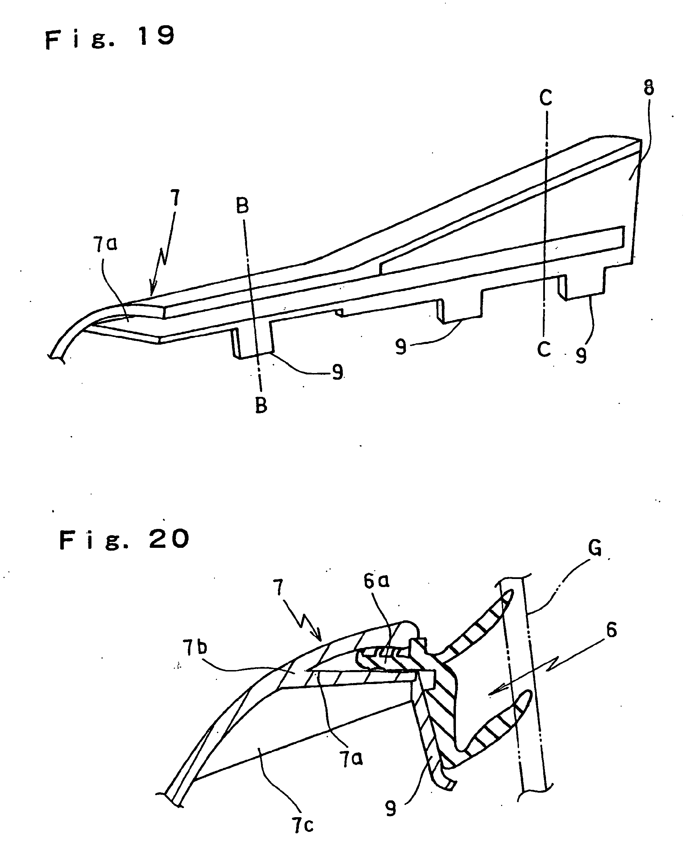

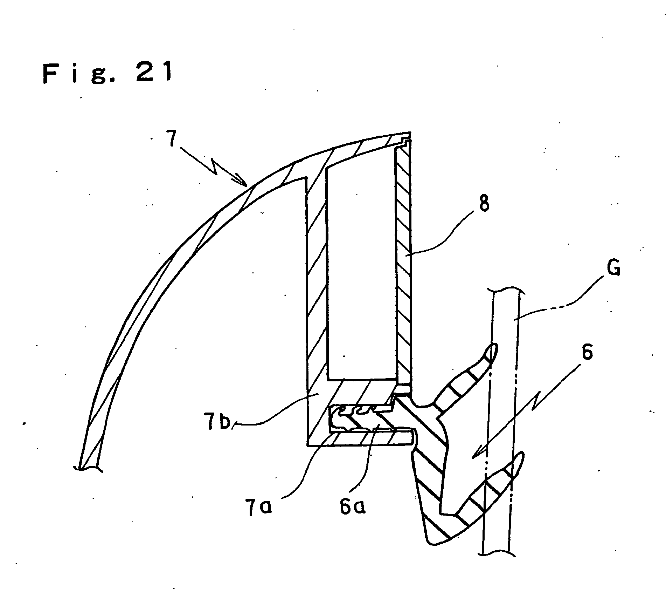

Further, as shown in Fig 19 to 21, there is another insertion-type of installation structure of a weather strip, which requires no inserts, bolts and hooks, and it is directly installed in a door trim in the frontward direction from outside of the car. Fig. 20 is an enlarged sectional view along line B-B in Fig. 19, and Fig. 21 is an enlarged sectional view along line C-C in Fig. 19.

According to this installation structure, the weight thereof can be decreased and the production cost is not increased. However, it is arranged that the entire weather strip 6 is held by merely inserting the base part 6a of the weather strip into the groove ditch 7a of the door trim 7. Therefore, it is necessary either to enlarge the thickness of the root part 7b or to provide a reinforce rib 7c in order to hold the weather strip 6 firmly. Therefore, the thickness of the door trim 7 becomes uneven, and the unevenness of the thickness causes the production of shrink marks on the design surface in the door trim 7. In this structure, the door trim 7 comprises a plural number of leg parts 9 at regular intervals for hanging the door trim 7 on a body part at a proper position between the outside and inside of a car.

Particularly, there is a drawback in the structure of the door trim 7 shown in Fig. 19, which gradually increases its height toward the front side of a car. This structure is also provided with a groove ditch 7a, thus, a lid part 8, an extra part, has to be provided at the outer front face of the door trim 7. This invites a drawback of higher production cost. Therefore, it is an object of the present invention to provide a weather strip and an installation structure comprising the weather strip, each of which is lighter in weight, easy to install, and can prevent the production cost from increasing by reducing a number of parts.

Another object of the present invention is to provide a weather strip and an installation structure comprising the weather strip, each of which can prevent the weather strip from moving for the reason that the weather strip has to be held often when handling a door trim.

Further, it is another object of the present invention to provide a weather strip and an installation structure comprising the weather strip of a type which associates with a door trim which gradually increases its height toward the front side of a car with a production cost not particularly high.

An installation structure including a door weather strip according to a first aspect of the invention comprises base parts (12, 13), seal parts (14, 15) and a body part (11). The base parts (12, 13) are installed in a door trim (30) in a frontward direction from an outside of a car. The door trim (30) is furnished at the inner side of a door along the belt line (BL) of a car. The seal parts (14, 15) make resilient contacts with a door glass (G). The body part (11) connects the base parts (12, 13) and the seal parts (14, 15).

The door trim (30) is provided with a groove ditch (31) at the upper portion thereof, and the groove ditch (31) opens toward the outside of a car. A leg parts) (32) is/are provided below the groove ditch (31) protruding below the groove ditch (31) and along the longitudinal direction of the door trim (30) continuously or intermittently. The base parts (12, 13) include an upper base part (12) which is forcibly inserted into the groove ditch (31) formed in the door trim (30), and a lower base part (13) which engages with the leg part (32).

An installation structure according to a second aspect of the invention comprises a groove part (33) at the lower portion of the leg part (32), in which the groove part (33) is engaged with the lower base part (13).

An installation structure according to a third aspect of the invention is such that either the upper base part (12) or the lower base part (13) is attached to the door trim (30), then the other base part is rotated in the door trim (30) side and attached to the door trim (30), while the former base part functions as a fulcrum.

An installation structure including a door weather strip according to a fourth aspect of the invention comprises a base part (12) and seal parts (14, 15). The base part (12) is attachable to a receiving part formed at the upper portion of the door trim (30) whose upper edge lays along the belt line (BL) of a car. The seal parts (14, 15) make resilient contacts with a door glass (G).

The weather strip (10) is installed in the door trim (30) from the outside of a car with the base part (12). The top end of the base part (12) of the door weather strip is shaped in a lip (16) figure in section for an engagement. The receiving part formed at the upper portion of the door trim (30) comprises a groove ditch (31) into which the lip (16) is forcibly inserted, and a slit (36) into which the lip (16) is forcibly inserted. The lip (16) elastically fits to the inner wall of the groove ditch (31) by its elastic resilience after being forcibly inserted into the groove ditch (31), while the lip (16) engages with the backside edge of the slit (36) at its top edge after insertion into the slit (36), thereby installing the door weather strip (10) in the door trim (30) with those two types of installation means.

A door weather strip according to a fifth aspect of the invention comprises a base part (12) and seal parts (14, 15). The base part (12) is attachable to a receiving part formed at the upper portion of the door trim (30) whose upper edge lays along the belt line (BL) of a car. The seal parts (14, 15) make resilient contacts with a door glass (G).

The weather strip (10) is installed in the door trim (30) with the base part (12) from the outside of a car. The top end of the base part (12) of the door weather strip is shaped in a lip (16) figure in section for an engagement. The receiving part formed at the upper portion of the door trim (30) comprises a groove ditch (31) into which the lip (16) is forcibly inserted, and a slit (36) into which the lip (16) is forcibly inserted. The lip (16) elastically fits to the inner wall of the groove ditch (31) by its elastic resilience after being forcibly inserted into the groove ditch (31), while the lip (16) engages with the backside edge of the slit (36) at its top edge after insertion into the slit (36), thereby installing in the door trim (30) with those two types of installation means.

An installation structure according to a sixth aspect of the invention relates to the inventions described in the first to the third aspects of the invention, wherein the upper base part (12) comprises a pillar part (41), an upper lip piece (42) and a lower lip piece (43). The pillar part (41) is inserted into the groove ditch (31) formed in the door trim (30). The upper lip piece (42) is provided on the top end of the pillar part (41). The lower lip piece (43) is provided beneath the top end of the pillar part (41). Both the upper and lower lip pieces (42, 43) make resilient contacts with the inner surface of the groove ditch (31). The pillar part (41) is made of a solid material while the upper lip piece (42) and the lower lip piece (43) are made of a soft material.

A door weather strip or an installation structure according to a seventh aspect of the invention relates to the fourth and fifth aspects of the invention. The lip formed in the top end of the base part (12) comprises an upper lip piece (42) provided on the top end of the pillar part (41). The lower lip piece (43) is provided under the top end of the pillar part (41). Both the upper and the lower lip pieces (42, 43) make resilient contacts with the inner surface of the groove ditch (31). The pillar part (41) is made of a solid material while the upper lip piece (42) and the lower piece (43) are made of a soft material.

Numerals in the parentheses indicate corresponding elements or matters signified in the drawings or under-mentioned embodiment of the invention.

According to the present invention, a door weather strip is installed in a door trim from the frontward direction. The door weather strip has two installation means at the upper side and the lower side, that is, the base part comprises the upper base part which is forcibly inserted into the groove ditch, and the lower base part which is engaged with the leg part.

Therefore, the thickness of a root part forming a groove ditch in the door trim should not particularly be formed as thick as that of a prior art. The root part can be formed smaller in thickness, or instead of this, the groove ditch can be formed shorter in depth, etc., thus a higher degree of freedom in production can be achieved.

Further, the lower base part is arranged to engage with a groove part formed in the leg part, so that an engagement between the door weather strip and the door trim becomes more firm.

Particularly, in a type of a door trim having the higher part which gradually increases its height toward the front side of a car, the weather strip can be firmly installed by merely integrally providing a wall at the outer front side of the door trim having a slit, into which the upper base part is inserted. Therefore, it is not necessary to provide a groove at the higher part having a depth like the prior art.

As a result, a structure of the door trim becomes simpler, and an extra part such as a lid part besides a door trim is unnecessary.

Further, a door weather strip is installed in a door trim by attaching either the upper base part or the lower base part at first, so that then the attached base part functions as a fulcrum, the other base part being rotated and attached to the corresponding part, so that it is easy to install with a little force.

Furthermore, the upper base part is provided with a lip which makes a resilient contact with an inner wall of a groove ditch formed in the door trim, so that a variation of the width of the groove ditch is absorbed by resilient force of the lip.

Further, the base part, which is inserted into the groove ditch formed in the door trim, comprises a pillar part, an upper lip piece and a lower lip piece provided at the top and the bottom of the pillar part. The pillar part is made of a solid material while the upper lip piece and the lower lip piece are made of a soft material, so that the top end of the upper base part does not fall down when it is inserted into the groove ditch. Therefore, an insertion operation of the upper base part becomes easier.

Fig. 1 is an elevation view of a door trim comprised in an installation structure of a weather strip according to the present invention.

Fig. 2 is an enlarged sectional view along line D-D in Fig. 1 showing a weather strip according to a first embodiment of the present invention being installed in a door trim illustrated in Fig. 1.

Fig. 3 is an enlarged sectional view along line E-E in Fig. 1 showing a door weather strip according to the present invention being installed in a door trim illustrated in Fig. 1.

Fig. 4 is an enlarged sectional view along line D-D in Fig. 1 showing an installation process of a weather strip illustrated in Fig. 2.

Fig. 5 is an enlarged sectional view along line D-D in Fig. 1 showing an installation process of a weather strip illustrated in Fig. 2.

Fig. 6 is an enlarged sectional view along line D-D in Fig. 1 showing an installation process of another weather strip.

Fig. 7 is an enlarged sectional view along line D-D in Fig. 1 showing an installation process of still another weather strip.

Fig. 8 is an enlarged sectional view along line D-D in Fig. 1 showing a door weather strip according to a second embodiment of the present invention being installed in a door trim illustrated in Fig. 1.

Fig. 9 is an enlarged sectional view of a door weather strip according to a second embodiment of the present invention showing its primary section.

Fig. 10 is an enlarged sectional view of another door weather strip according to a second embodiment of the present invention showing its primary section.

Fig. 11 is an enlarged sectional view of a weather strip wherein the entire top portion of the upper base part is made of a soft material.

Fig. 12 is a sectional view of the upper base part shown in Fig. 11 being installed in a groove ditch, wherein (a) shows a desired posture and (b) shows a posture the top end fell down.

Fig. 13 is an enlarged sectional view of still another door weather strip according a second embodiment of the present invention showing its primary section.

Fig. 14 is an enlarged sectional view showing a cover lip illustrated in Fig. 8 being curled up.

Fig. 15 is an enlarged sectional view of a door weather strip according to a third embodiment of the present invention showing its primary section.

Fig. 16 is a side view showing an appearance of a car.

Fig. 17 is an enlarged sectional view along line A-A in Fig. 16 showing an installation structure according to a prior art.

Fig. 18 is a perspective view of a weather strip modified from the door weather strip illustrated in Fig. 17.

Fig. 19 is an elevation view of a door trim comprised in an installation structure of a door weather strip according to another prior art.

Fig. 20 is an enlarged sectional view along line B-B in Fig. 19 showing a door weather strip according to another prior art being installed in a door trim illustrated in Fig. 19.

Fig. 21 is an enlarged sectional view along line C-C in Fig. 19 showing a door weather strip according to another prior art being installed in a door trim illustrated in Fig. 19.

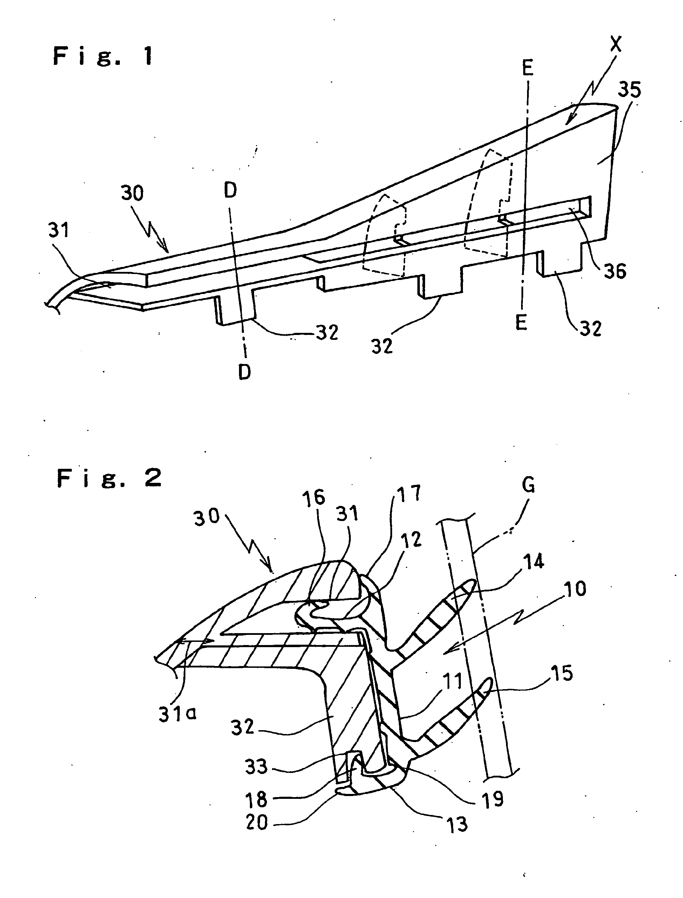

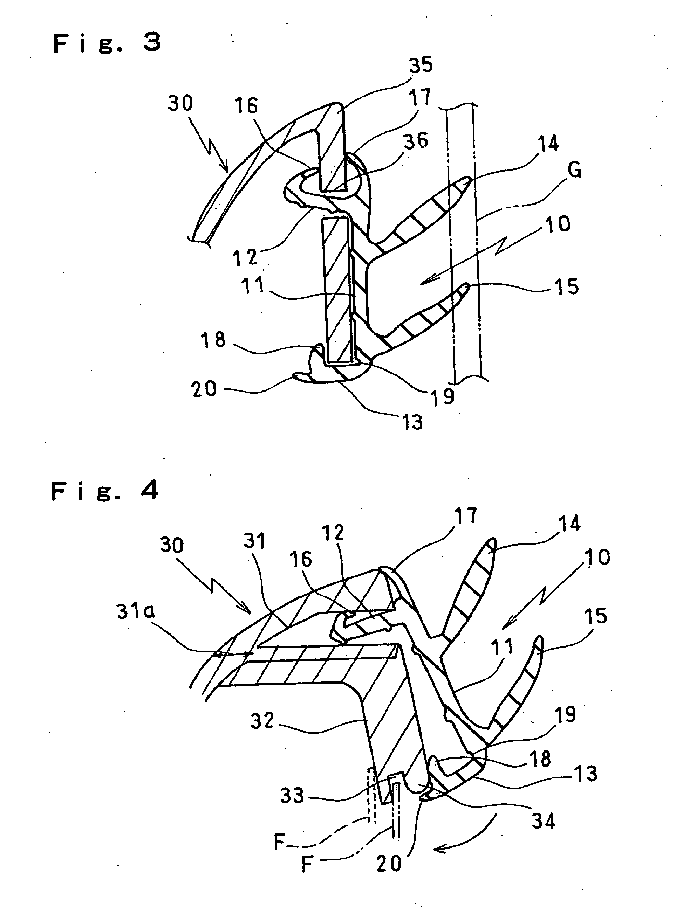

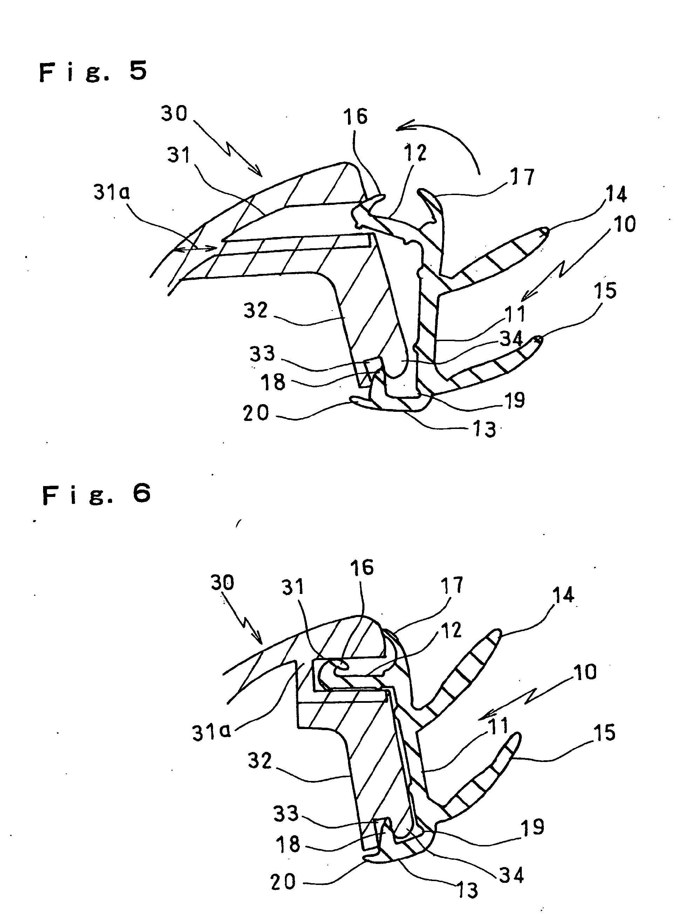

A first embodiment of the present invention will be described hereinafter referring to Figs. 1 to 5. Fig. 1 illustrates a door trim 30 provided in an installation structure according to the present invention. Fig. 2 illustrates an enlarged sectional view along line D-D in Fig. 1, and Fig. 3 is an enlarged sectional view along line E-E in Fig. 1. Fig. 4 and 5 are enlarged sectional views along line D-D in Fig. 1, each showing an installation process of the door weather strip shown in Fig. 2.

An installation structure of a weather strip according to the present invention comprises a door trim 30 and a door weather strip 10. The door trim 30 is installed on the inner side of a door, positioning its top edge along the belt line BL of a car as shown in Fig. 16. The door weather strip 10 is directly installed in the door trim 30 in the frontward direction from outside of the car.

As shown in Fig. 1, the door trim 30 is provided with a higher part X which gradually increases its height toward the front side of the car in order to correspond to an instrumental panel (not shown) for a design reason. At the upper portion of the door trim 30, there is provided a groove ditch 31 which is wide open toward the outside of the car. Below the groove ditch 31, there are provided leg parts 32, extending below the groove ditch 31, along the longitudinal direction of the door trim 30 at regular intervals (Fig. 1 shows three leg parts 32). The top edge of the protrusion part 34 located outer side of the leg part 32 is chamfered to achieve an easy engagement between a under-mentioned convex part 18 and the groove part 33. The leg parts 32 may be provided in an unified form in the longitudinal direction along the door trim 30.

Further, as shown in Fig. 3, there is provided a wall 35 at the outer side surface of the higher part X, which is integrally molded with the higher part X and is directed in the downward direction. A slit 36 is formed in the wall 35 at the height with a dip approximately equal to the groove ditch 31. The slit 36 can be continuously formed with the groove ditch 31.

As shown in Fig. 2, the door weather strip 10 comprises a planar body part 11, an upper base part 12 projecting from the upper portion of the body part 11 toward the door trim 30 side (toward inside of the car), a lower base part 13 projecting from the lower portion of the body part 11 toward the door trim 30 side like the upper base part 12. It also comprises a pair of seal parts 14, 15 at the upper and lower portions of the body part 11, each makes an elastic contact with a door glass G which slides in the up-and-down direction. The shape and number of seal parts 14, 15 are not limited to those shown in this embodiment. Also, the shape of the body part 11 is not limited as long as it is able to connect the base parts 12, 13 and the seal parts 14, 15 together.

The upper base part 12 is projected straight forwardly in section from the upper portion of the body part 11. Although, the shape of the upper base part 12 is not limited, it is provided with a lip 16 at the top edge thereof. The lip 16 makes an elastic contact by its elastic resilience with the inner surface of the groove ditch 31 formed in the door trim 30 after it is forcibly inserted in the groove ditch 31 for a installation. The lip 16 absorbs a variation of the dip of the groove ditch 31. It also generates retentive force against the groove ditch 31. Further, there is provided another lip 17 at the upper portion of the body part 11, projecting in the vertical direction against the upper base part 12, and covering the upper portion of the door trim 30.

The lower base part 13 is projected from the lower portion of the body part 11 forming a L-shape figure with the body part 11, and is provided with a convex part 18 at the top edge thereof in the upward direction. The convex part 18 engages with a groove part 33 formed in the leg part 32 when the door weather strip 10 is installed in the door trim 30. A notch 19 is provided at the root part of the lower base part 13 which is approximately linear in section against the body part 11. The notch 19 makes the linear portion of the lower base part 13 easily bend and achieves an easy engagement between the convex part 18 and the groove part 33. Further, there is provided a fin piece 20 at the root portion of the convex part 18 of the lower base part 13, and as shown in Fig. 4, the fin piece 20 prevents the flange F from erroneously inserting into a space formed between the leg part 32 of the door trim 30 and the convex part 18.

As shown in Fig. 4, in order to install the door weather strip to the door trim, the door weather strip 10 is faced toward the door trim 3 at first, then the upper base part 12 is forcibly inserted into the groove ditch 31 formed in the door trim 30. And, by making the upper base part 12 function as a fulcrum, the lower base part 13 is rotated toward the door trim 30 side, and engages the convex part 18 formed in the lower base part 13 with groove part 33 formed in the leg part 32.

Further, as shown in Fig. 5, on the contrary to the above-described installation process, the convex part 18 formed in the lower base part 13 can be engaged with the groove part 33 formed in the leg 32 at first, then letting the convex part 18 function as a fulcrum, the upper base part 12 can be rotated toward the door trim 30 side, and resiliently inserts the upper base part 12 into the groove ditch 31 formed in the door trim 30. It is noted that when the weather strip 10 is installed in the door trim 30 in a manner described above and as shown in Fig. 5, both the notch 19 and the chamfering of the convex part 18 should not be prepared for a easy installation and a better engagement.

Both the upper base part 12 and the lower base part 13 may be installed in the door trim 30 at the same time using the elastic force they have. However, as described and illustrated in Fig. 4 and 5, it is easier to install by installing either one the base part 13 or 14 at first, then installing the other base part by rotating the same base part.

As shown in Fig. 3, as for the higher part X of the door trim 30 which gradually increases its height toward the front side of the car, the upper base part 12 of the door weather strip 10 is inserted into the slit 36 formed in the wall 35 with the lip 16 forcibly inserted into the slit 36. With this operation, the top end of the lip 16 engages with the backside rim of the slit 36. And so, the upper base part 12 engages with the door trim 30 at two different sections: one is the groove ditch 31 and the other is the slit 36. By doing so, the door weather strip 10 can be firmly installed, and thus the lower base part 13 may not necessarily be secured.

According to this embodiment, it is unneeded to form a groove ditch 31 at the higher part X for receiving the base part 12 of the door weather strip 10. It is only needed to form the slit 36 which is simple in structure compared to the groove ditch 31, so that the structure of the higher part X including the wall 35 becomes simple and such simple wall 35 can be integrally molded easily.

According to this embodiment, the door weather strip 10 is secured to the door trim 30 at two sections, the upper base part 12 and the lower base part 13, therefore, it is not particularly required to form the root part 31a with a thick wall. The root part 31a is apart of forming the groove ditch 31 in the door trim 30.

Therefore, as shown in Fig. 6, a wall thickness of the root part 31a can be formed thinner, or instead, the depth of the groove ditch 31 can be shortened.

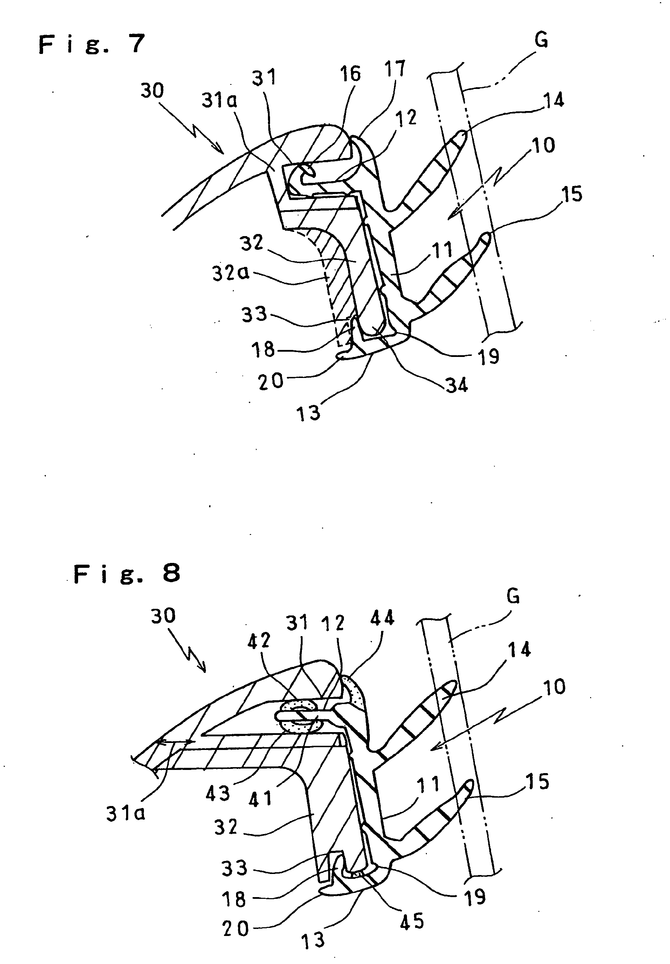

Further, as shown in Fig. 7, it can form the inner side part 32a of the leg 32 forming the groove part 33 in the door trim 30 intermittently and not continuously, so that the material cost of the door trim 30 can be saved. Moreover, though not illustrated in the drawings, the inner wall part 32a and the fin piece 20 formed at the lower base part 13 of the door weather strip 10 can be unformed, and the convex part 18 can be formed a little larger instead.

Although, in this embodiment, the higher part X is provided at the front side of the door trim 30, the present invention includes a door trim which is horizontally formed toward the front side of a car not having such higher part X.

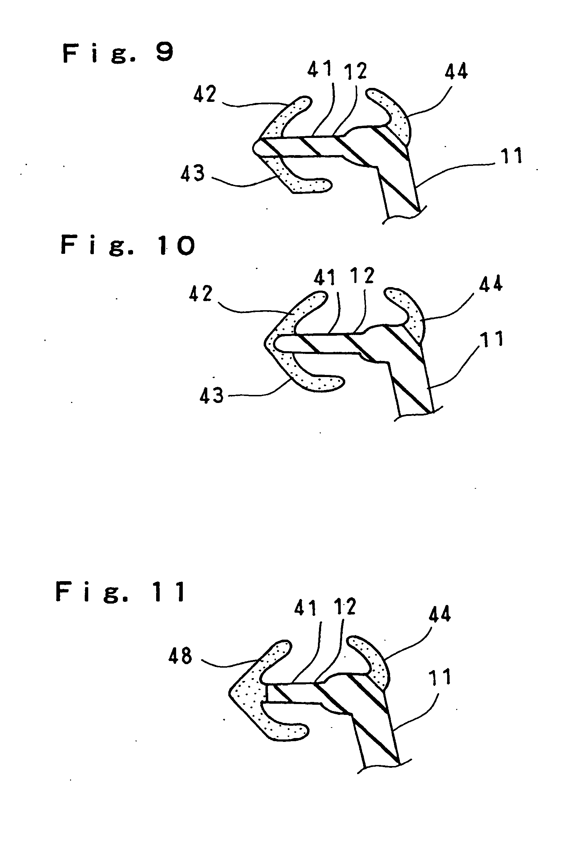

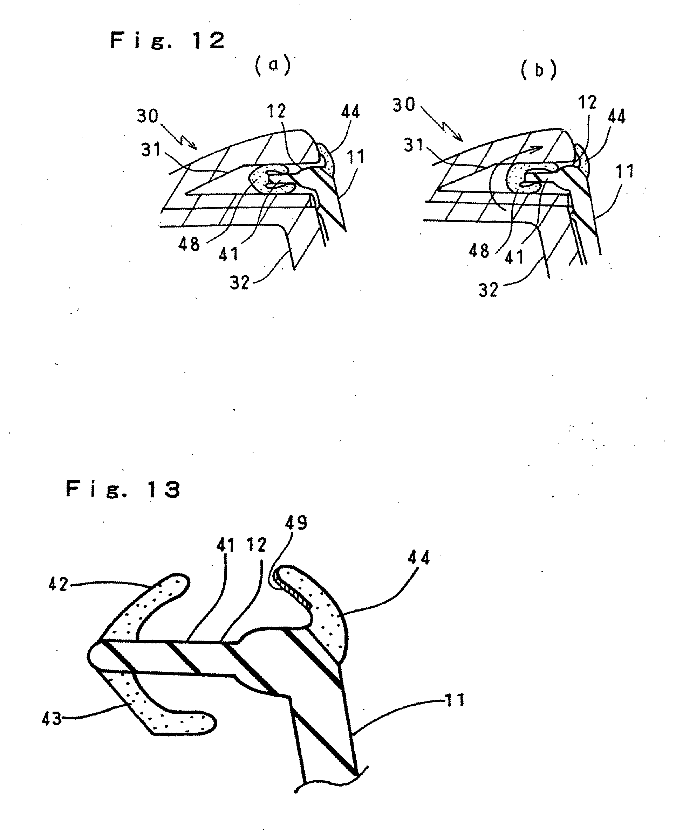

A second embodiment according to the present invention will be described below referring to Figs. 8 to 14. Fig. 8 is an enlarged sectional view along line D-D in Fig. 1 showing a structure in which a door weather strip is installed in a door trim 30 according to the present invention. Fig. 9 is an enlarged sectional view showing a primary portion of a door weather strip according to the second embodiment of the present invention. Fig. 10 is an enlarged sectional view showing a primary portion of another door weather strip according to the second embodiment of the present invention. Fig. 13 is an enlarged sectional view showing still another embodiment according to the second embodiment of the present invention. The parts similar to those in the first embodiment are indicated with similar numerals, and descriptions thereof are omitted.

An installation structure according to the second embodiment of the present invention primarily differs from the first embodiment in a structure of the upper base part 12.

That is, as shown in Fig. 8 and 9, the upper base part 12 comprises a pillar part 41, which is inserted into a groove ditch 31 formed in the door trim 30, and an upper lip piece 42 and a lower lip piece 43 provided at the upper and lower portions of the pillar part 41. The pillar part 41 is made of a solid material such as, for example, a solid rubber or resin, while the upper lip piece 42 and the lower lip piece 43 are made of a soft material such as, for example, a sponge rubber or resign. According to this second embodiment, a cover lip 44 is made of a soft material like the upper lip piece 42 and the lower lip piece 43, and the rest including the body part 11, the lower base part 13, the upper seal part 14 and the lower seal part 15 are made of a solid material. However, according to the scope of this embodiment, it is at least the pillar part 41 which should be made of a solid material, and the upper lip piece 42 and the lower lip piece 43 should be made of a soft material.

In this embodiment, both the upper lip piece 42 and the lower lip piece 43 are curved from the top edge side of the pillar part 41 toward the root part side. They are further curved when they are installed in the door trim 30, and elastically contact with the inner wall of the groove ditch 31 similar to the lip 16 in the first embodiment. In this second embodiment, although the lower lip piece 43 is arranged longer than the upper lip piece 42, the present invention is not limited to such structure.

According to this embodiment, the solid pillar part 41 made of a solid material takes place at the top end 48 of the upper base part 12, so that the top end 48 of the upper base part 12 does not fall down when it is inserted into the groove ditch 31 unlike the embodiments disclosed in Figs. 11 and 12 as comparative examples in which a soft material takes place at the top end 48 of the upper base part 12, though, the former embodiment requires a mouthpiece of more complicated structure compared to the latter embodiment when the shape in section of the top end 48 of the upper base part 12 is formed in a mold.

That is, the embodiment whose top end is made of a soft material as illustrated in Fig. 11 may be successfully inserted into the groove ditch 31 as shown in Fig. 12 (a). However, in this embodiment, the top end thereof tends to fall down in a direction shown by an arrow in Fig. 12 (b), so that a workability of insertion falls. The second embodiment of the installation structure according to the present invention as illustrated in Figs. 8 and 9 does not have such drawback.

There may be provided convex parts or sponge projections 45 at certain sections of the lower base part 13 or the body part 11, where the door trim 30 makes contact with. With such structure, it can prevent the noise, which is generated during an elevation of the door glass G, or driving a car.

As an example of an installation structure including the weather strip according to the second embodiment of the invention, there is an embodiment as illustrated in Fig. 10, wherein an upper lip piece 42 and a lower lip piece 43, which are separately formed in the previous embodiment, are partially connected with each other covering the top end of the pillar part.41.

In this embodiment, the front ends of the upper lip piece 42 and the lower lip piece 43 are connected before the top end of the pillar part 41 in such manner that they do not fall down when they are inserted into the groove ditch 31. According to this embodiment, a mouthpiece for forming the top end's shape in section of the upper base part 12 of the door weather strip can become simpler in structure compared to the embodiment shown in Fig. 9.

Further, as illustrated in Fig. 13, as another example of an installation structure of the door weather strip according to the second embodiment of the present invention, an embodiment can be provided with a sliding material 49 or a solid material on a cover lip 44 at the door trim 30 side.

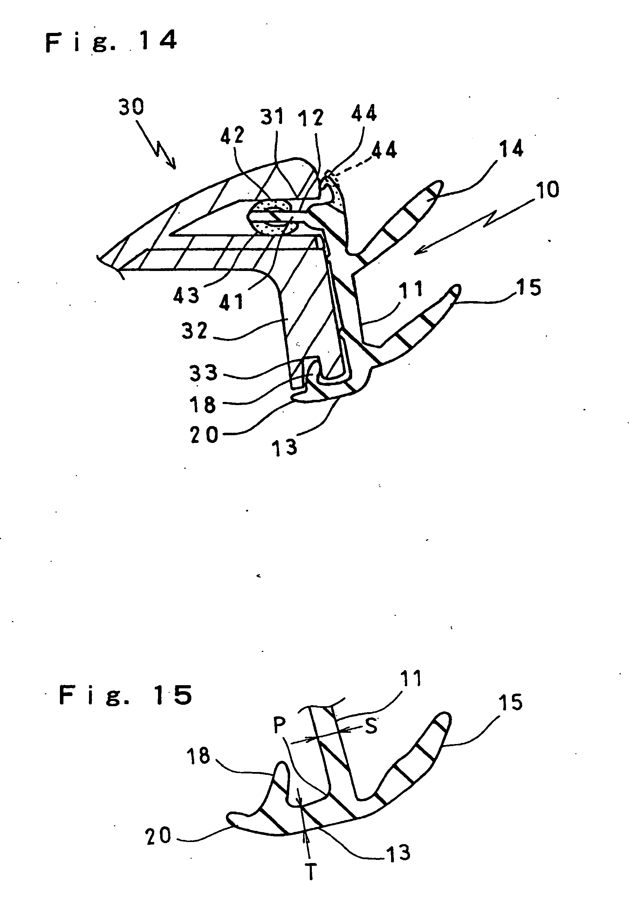

That is, as shown in Fig. 14, when the upper base part 12 is forcibly inserted into the groove ditch 31 of the door trim 30, the cover lip 44 may be curled up. By providing the sliding material 40 or the solid material on the surface of the cover lip 44, the cover lip 44 can be prevented from curling up.

A third embodiment of an installation structure according to the present invention will be described referring to Fig. 15. Fig. 15 is an enlarged sectional view showing a primary part of a door weather strip according to the third embodiment. Same numerals are given to the same parts described in the first embodiment, and explanation of the parts is omitted.

An installation structure according to the third embodiment of the invention defines the figure of the lower base part 13 described in the first embodiment.

As illustrated in Fig. 15, the thickness S of the lower part of the body part 11 in section as well as the thickness T of the lower base part 13 in section are defined to 1.5 mm or more, and the root part P of the lower base part 13 is rounded instead of forming a notch 19 as described in the first embodiment.

In general, a weight reduction may be performed by thinning the thickness T of the body part 11. However, if TPE (thermoplastic elastomer) material having 1,000 Mpa or less of a bending elastic modulus is formed into a shape of less that 1.5 mm in thickness T, the rigidity of the material weakens, and when the convex part 18 engages with the groove part 33, the door weather strip made of such material deforms and the convex part 18 is pull out from the groove part 33. In order to avoid such drawback, a glass fiber may be embedded in such material for improving the rigidity thereof while keeping its thin structure. However, when a design of a car is concerned, such material has difficulty in following the door trim 30 even if a little curvature is applied to the door trim 30.

An installation structure according to the third embodiment of the present invention defines the thickness S of the body part 11 in section and the thickness T of the lower base part 13 as 1.5 mm or more, so that the rigidity thereof increases. Therefore, when the convex part 18 is engaged with the groove part 33 formed in the leg part 32, the deformation of the door weather strip is prevented. Further, the deformation of the weather strip is additionally prevented by rounding the inner side of the root part P of the lower base part 13.

By applying those structures, if the TPE (thermoplastic elastomer) material having 1,000 Mpa or less of bending elastic modulus is used, the weather strip can follow the curvature applied for a purpose of design, and the convex part 18 hardly deforms and it does not pull out from the groove part 33.

According to the present invention, a door weather strip is installed in a door trim from the frontward direction, so that it is easier to install compared to a slide type which is installed sliding in the cross section against the door trim. Further, inserts, bolts and hooks for installation are unneeded, so that a production cost can be saved.

Furthermore, the door weather strip comprises two installation parts, an upper base part which is forcibly inserted into a groove ditch formed in the door trim, and a lower base part which engages with a leg part, so that the thickness of a root part forming a groove ditch in the door trim should not particularly be formed as thick as that of the prior art. Therefore, the root part can be formed smaller in thickness, or instead of this, the groove ditch can be formed shorter in depth, etc., thus a higher degree of freedom in production can be achieved.

Further, the lower base part is arranged to engage with a groove part formed in the leg part, so that an engagement between the door weather strip and the door trim becomes more firm. Particularly, in a type of a door trim having the higher part which gradually increases its height toward the front side of a car, the weather strip can be firmly installed by merely integrally providing a wall at the outer front side of the door trim having a slit into which the upper base part is inserted. Therefore, it is not necessary to provide a groove having a depth at the higher part like the prior art.

As a result, a structure of the door trim becomes simpler, and an extra part such as a lid part besides a door trim is unnecessary.

Further, a door weather strip is installed in a door trim by attaching either the upper base part or the lower base part at first, then the attached base part can function as a fulcrum, the other base part being rotated and attached to the corresponding part, so that it is easy to install with a little force.

Furthermore, the upper base part is provided with a lip which makes an resilient contact with an inner wall of a groove ditch formed in the door trim, so that a variation of the width of the groove ditch is absorbed by resilient force of the lip.

Further, the base part, which is inserted into the groove ditch formed in the door trim, comprises a pillar part, an upper lip piece and a lower lip piece provided at the top and the bottom of the pillar part. The pillar part is made of a solid material while the upper lip piece and the lower lip piece are made of a soft material, so that the toe end of the upper base part does not fall down when it is inserted into the groove ditch. Therefore, an insertion operation of the upper base part becomes easier.

## Claims

1. An installation structure including a door trim (30) and a weather strip (10), the door weather strip comprising:
base parts (12, 13) which are installed in the door trim in a frontward direction from an outside of a car, said door trim being arrangable at the inner side of a door along the belt line (BL) of a car;
seal parts (14, 15) which are arranged to make resilient contacts with a door glass (G); **characterized by**
a body part (11) which connects the base parts and the seal parts together; wherein,
the door trim (30) is provided with a groove ditch (31) at the upper portion thereof, said groove ditch opens toward the outside of a car;
a leg part (32) is provided under the groove ditch (31) protruding below the groove ditch, along the longitudinal direction of the door trim (30) continuously or intermittently
the base parts (12, 13) of the door weather strip includes an upper base part (12) which is forcibly inserted into the groove ditch (31) formed in the door trim (30), and a lower base part (13) which engages with the leg part (32).

2. An installation structure including a door weather strip claimed in claim 1, wherein a groove part (33) is formed at the lower portion of the leg part (32), wherein the lower base part (13) engages with said groove part (33).

3. An installation structure including a door weather strip claimed in claim 1 or 2, wherein, either the upper base part (12) or the lower base part (13) is attached to the door trim at first, then the other base part is rotated in the door trim side and attached to the door trim, while the first attached base part functions as a fulcrum.

4. An installation structure claimed in claim 1, 2 or 3, wherein, the upper base part comprises:
a pillar part (41) which is inserted into the groove ditch (31) formed in the door trim (30);
an upper lip piece (42) provided on the top end of the pillar part (41),
a lower lip piece (43) provided beneath the top end of the pillar part (41);
both lip pieces (42, 43) make resilient contacts with the inner surface of the groove ditch;
the pillar part is made of a solid material while the upper lip piece and the lower lip piece are made of a soft material.

5. An installation structure including a door trim (30) and a door weather strip (10) comprising:
a base part (12) which is attachable to a receiving part formed at the upper portion of the door trim whose upper edge lays along the belt line (BL) of a car;
seal parts (14, 15) which make resilient contacts with a door glass (G), wherein,
the weather strip is installed in the door trim (30) from the outside of a car with the base part (12);
**characterized by**
the top end of the base part of the door weather strip is shaped in a lip (16) figure in section for an engagement;
the receiving part formed at the upper portion of the door trim comprises a groove ditch (31) into which the lip (16) is forcibly inserted, and a slit (36) into which the lip (16) is forcibly inserted
the lip (16) elastically fits to the inner wall of the groove ditch by its elastic resilience after being forcibly inserted into the groove ditch (31), while the lip engages with the backside edge of the slit (36) at its top edge after insertion into the slit, thereby installing the door weather strip in the door trim with those two types of installation means.

6. A door weather strip (10) comprising:
a base part (12) which is attachable to a receiving part formed at the upper portion of the door trim whose upper edge lays along the belt line (BL) of a car;
seal parts (14, 15) which make resilient contacts with a door glass (G), wherein,
the weather strip is installed in the door trim (30) with the base part from the outside of a car;
**characterized by**
the top end of the base part of the door weather strip is shaped in a lip (16) figure in section for an engagement;
the receiving part formed at the upper portion of the door trim comprises a groove ditch (31) into which the lip (16) is forcibly inserted, and a slit (36) into which the lip (16) is forcibly inserted;
the lip elastically fits to the inner wall of the groove ditch by its elastic resilience after being forcibly inserted into the groove ditch (31), while the lip engages with the backside edge of the slit (36) at its top edge after insertion into the slit, thereby installing in the door trim with those two types of installation means.

7. A door weather strip or an installation structure including the door weather strip claimed in claim 5 or 6, wherein,
the lip formed in the top end of the base part comprises an upper lip piece (42) provided on the top end of a pillar part (41), and a lower lip piece (43) provided under the top end of the pillar part;
both lip pieces make resilient contacts with the inner surface of the groove ditch (31) ;
the pillar part is made of a solid material while the upper lip piece and the lower piece are made of a soft material.

## Patentansprüche

1. Einbaustruktur, beinhaltend eine Türverkleidung (30) und einen Dichtungsstreifen (10), wobei der Türdichtungsstreifen folgendes umfasst:
Basisteile (12, 13), die in der Türverkleidung in einer Richtung nach vorne von einer Außenseite eines Autos installiert werden, wobei die Türverkleidung an der Innenseite einer Tür entlang einer Gürtellinie (BL) eines Autos angebracht werden kann;
Dichtungsteile (14, 15), die so angeordnet sind, dass sie elastische Kontakte mit einem Türglas (G) schaffen;
**gekennzeichnet durch**
einen Rumpfteil (11), der die Basisteile und die Dichtungsteile miteinander verbindet; wobei
die Türverkleidung (30) am oberen Bereich davon mit einem Schlitzkanal (31) versehen ist, wobei sich der Schlitzkanal zur Außenseite eines Autos hin öffnet;
ein Beinteil (32), der unter dem Schlitzkanal hervorspringt, unter dem Schlitzkanal (31) entlang der Längsrichtung der Türverkleidung (30) kontinuierlich oder intermittierend vorgesehen ist;
die Basisteile (12, 13) des Türdichtungsstreifens einen oberen Basisteil (12), der mit Kraft in den Schlitzkanal (31), der in der Türverkleidung (30) ausgebildet ist, eingesetzt wird, und einen unteren Basisteil (13) beinhalten, der mit dem Beinteil (32) in Eingriff kommt.

2. Einbaustruktur, beinhaltend einen Türdichtungsstreifen nach Anspruch 1, wobei ein Schlitzteil (33) am unteren Bereich des Beinteils (32) ausgebildet ist, wobei das untere Basisteil (13) mit dem Schlitzteil (33) in Eingriff kommt.

3. Einbaustruktur, beinhaltend einen Türdichtungsstreifen nach Anspruch 1 oder 2, wobei zuerst entweder der obere Basisteil (12) oder der untere Basisteil (13) an der Türverkleidung angebracht wird, dann der andere Teil in die Türverkleidungsseite gedreht wird und an der Türverkleidung angebracht wird, während der erste Basisteil als ein Drehpunkt dient.

4. Einbaustruktur nach Anspruch 1, 2 oder 3, wobei der obere Basisteil folgendes umfasst:
einen Stützenteil (41), der in den Schlitzkanal (31), der in der Türverkleidung (30) ausgebildet ist, eingesetzt wird;
ein oberes Lippenstück (42), das am Kopfende des Stützenteils (41) vorgesehen ist;
ein unteres Lippenstück (43), das unterhalb des Kopfendes des Stützenteils (41) vorgesehen ist;
wobei beide Lippenteile (42, 43) elastische Kontakte mit der inneren Oberfläche des Schlitzkanals schaffen;
der Stützteil aus einem festen Material gefertigt ist, während das obere Lippenteil und das untere Lippenteil aus einem weichen Material gefertigt sind.

5. Einbaustruktur, beinhaltend eine Türverkleidung (30) und einen Dichtungsstreifen (10), umfassend:
ein Basisteil (12), das an einem Aufnahmeteil angebracht werden kann, der am oberen Bereich der Türverkleidung ausgebildet ist, deren obere Kante entlang der Gürtellinie (BL) eines Autos verläuft;
Dichtungsteile (14, 15), die elastische Kontakte mit einem Türglas (G) schaffen, wobei
der Dichtungsstreifen mit dem Basisteil in der Türverkleidung (30) von der Außenseite eines Autos eingebaut wird;
**dadurch gekennzeichnet, dass**
das Kopfende des Basisteils des Dichtungsstreifens im Schnitt zum Eingreifen in einer Lippengestalt (16) geformt ist;
der Aufnahmeteil, der am oberen Bereich der Türverkleidung ausgebildet ist, einen Schlitzkanal (31), in den die Lippe mit Kraft eingesetzt wird, und einen Schlitz (36) umfasst, in den die Lippe (16) mit Kraft eingesetzt wird;
die Lippe (16) durch seine Elastizität elastisch an die innere Wand des Schlitzkanals passt, nachdem sie mit Kraft in den Schlitzkanal (31) eingesetzt wurde, während die Lippe mit der rückseitigen Kante des Schlitzes (36) an seiner oberen Kante nach Einsetzen in den Schlitz in Eingriff kommt, wodurch der Türdichtungsstreifen mit diesen beiden Typen von Einbaumitteln in der Türverkleidung eingebaut wird.

6. Türdichtungsstreifen (10), umfassend:
ein Basisteil (12), das an einem Aufnahmeteil angebracht werden kann, der am oberen Bereich der Türverkleidung ausgebildet ist, deren obere Kante entlang der Gürtellinie (BL) eines Autos verläuft;
Dichtungsteile (14, 15), die elastische Kontakte mit einem Türglas (G) schaffen, wobei
der Dichtungsstreifen mit dem Basisteil in der Türverkleidung (30) von der Außenseite eines Autos eingebaut wird;
**dadurch gekennzeichnet, dass**
das Kopfende des Basisteils des Dichtungsstreifens im Schnitt zum Eingreifen in einer Lippengestalt (16) geformt ist;
der Aufnahmeteil, der am oberen Bereich der Türverkleidung ausgebildet ist, einen Schlitzkanal (31), in den die Lippe (16) mit Kraft eingesetzt wird, und einen Schlitz (36) umfasst, in den die Lippe (16) mit Kraft eingesetzt wird;
die Lippe durch seine Elastizität elastisch an die innere Wand des Schlitzkanals passt, nachdem sie mit Kraft in den Schlitzkanal (31) eingesetzt wurde, während die Lippe mit der rückseitigen Kante des Schlitzes (36) an seiner oberen Kante nach Einsetzen in den Schlitz in Eingriff kommt, wodurch er mit diesen beiden Typen von Einbaumitteln in der Türverkleidung eingebaut wird.

7. Türdichtungsstreifen oder eine Einbaustruktur, enthaltend den Türdichtungsstreifen, nach Anspruch 5 oder 6, wobei
die Lippe, die im Kopfende des Basisteils ausgebildet ist, ein oberes Lippenstück (42), das am Kopfende eines Stützenteils (41) vorgesehen ist, und ein unteres Lippenstück (43) umfasst, das unterhalb des Kopfendes des Stützenteils vorgesehen ist;
beide Lippenteile (42, 43) elastische Kontakte mit der inneren Oberfläche des Schlitzkanals (31) schaffen;
der Stützteil aus einem festen Material gefertigt ist, während das obere Lippenteil und das untere Lippenteil aus einem weichen Material gefertigt sind.

## Revendications

1. Structure d'installation comprenant une garniture de portière (30) et un caoutchouc d'étanchéité (10), le caoutchouc d'étanchéité de portière comprenant :
des parties de base (12, 13) qui sont installées dans la garniture de portière dans une direction vers l'avant à partir d'un côté extérieur d'une voiture, ladite garniture de portière pouvant être agencée au niveau du côté interne d'une portière le long de la ceinture de caisse (BL) d'une voiture ;
des parties d'étanchéité (14, 15) qui sont agencées pour réaliser des contacts résilients avec une vitre de portière (G) ;
**caractérisée par**
une partie de carrosserie (19) qui raccorde les parties de base et les parties d'étanchéité ensemble ; dans laquelle
la garniture de portière (30) est munie d'une rigole formant rainure (31) au niveau de la portion supérieure de celle-ci, ladite rigole formant rainure s'ouvre vers l'extérieur d'une voiture ;
une partie de jambe (32) est prévue sous la rigole formant rainure (31) dépassant en dessous de la rigole formant rainure, le long de la direction longitudinale de la garniture de portière (30) en continu ou par intermittence
les parties de base (12, 13) du caoutchouc d'étanchéité de portière comprennent une partie de base supérieure (12) qui est insérée en forçant dans la rigole formant rainure (31) formée dans la garniture de portière (30), et une partie de base inférieure (13) qui vient en prise avec la partie de jambe (32).

2. Structure d'installation comprenant un caoutchouc d'étanchéité de portière selon la revendication 1, dans laquelle une partie de rainure (33) est formée au niveau de la portion inférieure de la partie de jambe (32), dans laquelle la partie de base inférieure (13) vient en prise avec ladite partie de rainure (33).

3. Structure d'installation comprenant un caoutchouc d'étanchéité de portière selon la revendication 1 ou 2, dans laquelle soit la partie de base supérieure (12), soit la partie de base inférieure (13) est fixée à la garniture de portière d'abord, puis l'autre partie de base est tournée dans le côté de garniture de portière et fixée à la garniture de portière, tandis que la première partie de base fixée fonctionne comme point d'appui.

4. Structure d'installation selon la revendication 1, 2 ou 3, dans laquelle la partie de base supérieure comprend :
une partie de pilier (41) qui est insérée dans la rigole formant rainure (31) formée dans la garniture de portière (30) ;
un morceau de lèvre supérieur (42) prévu sur l'extrémité supérieure de la partie de pilier (41) ;
un morceau de lèvre inférieur (43) prévu sous l'extrémité supérieure de la partie de pilier (41) ;
les deux morceaux de lèvre (42, 43) réalisent des contacts résilients avec la surface interne de la rigole formant rainure ;
la partie de pilier est constituée d'un matériau solide tandis que le morceau de lèvre supérieur et le morceau de lèvre inférieur sont constitués d'un matériau souple.

5. Structure d'installation comprenant une garniture de portière (30) et un caoutchouc d'étanchéité de portière (10) comprenant :
une partie de base (12) qui peut être fixée à une partie de réception formée au niveau de la portion supérieure de la garniture de portière dont le bord supérieur repose le long de la ceinture de caisse (BL) d'une voiture ;
des parties d'étanchéité (14, 15) qui réalisent des contacts résilients avec une vitre de portière (G), dans laquelle
le caoutchouc d'étanchéité est installé dans la garniture de portière (30) à partir de l'extérieur d'une voiture avec la partie de base (12) ;
**caractérisée en ce que**
l'extrémité supérieure de la partie de base de caoutchouc d'étanchéité de portière est mise en forme de lèvre (16) en section pour une mise en prise ;
la partie de réception formée au niveau de la portion supérieure de la garniture de portière comprend une rigole formant rainure (31) dans laquelle la lèvre (16) est insérée en forçant, et une fente (36) dans laquelle la lèvre (16) est insérée en forçant
la lèvre (16) s'ajuste élastiquement à la paroi interne de la rigole formant rainure par sa résilience élastique après avoir été insérée en forçant dans la rigole formant rainure (31), tandis que la lèvre vient en prise avec le bord arrière de la fente (36) au niveau de son bord supérieur après insertion dans la fente, installant ainsi le caoutchouc d'étanchéité de portière dans la garniture de portière avec ces deux types de moyens d'installation.

6. Caoutchouc d'étanchéité de portière (10) comprenant :
une partie de base (12) qui peut être fixée à une partie de réception formée au niveau de la portion supérieure de la garniture de portière dont le bord supérieur repose le long de la ceinture de caisse (BL) d'une voiture ;
des parties d'étanchéité (14, 15) qui réalisent des contacts résilients avec une vitre de portière (G), dans lequel
le caoutchouc d'étanchéité est installé dans la garniture de portière (30) avec la partie de base à partir de l'extérieur d'une voiture;
**caractérisé en ce que**
l'extrémité supérieure de la partie de base du caoutchouc d'étanchéité de portière est mise en forme de lèvre (16) en section pour une mise en prise ;
la partie de réception formée au niveau de la portion supérieure de la garniture de portière comprend une rigole formant rainure (31) dans laquelle la lèvre (16) est insérée en forçant, et une fente (36) dans laquelle la lèvre (16) est insérée en forçant ;
la lèvre s'adapte élastiquement à la paroi interne de la rigole formant rainure par sa résilience élastique après avoir été insérée en forçant dans la rigole formant rainure (31), tandis que la lèvre vient en prise avec le bord arrière de la fente (36) au niveau de son bord supérieur après insertion dans la fente, en s'installant ainsi dans la garniture de portière avec ces deux types de moyens d'installation.

7. Caoutchouc d'étanchéité de portière ou structure d'installation comprenant le caoutchouc d'étanchéité de portière selon la revendication 5 ou 6, dans lequel
la lèvre formée dans l'extrémité supérieure de la partie de base comprend un morceau de lèvre supérieur (42) prévu sur l'extrémité supérieure d'une partie de pilier (41), et un morceau de lèvre inférieur (43) prévu sous l'extrémité supérieure de la partie de pilier ;
les deux morceaux de lèvre réalisent des contacts résilients avec la surface interne de la rigole formant rainure (31) ;
la partie de pilier est constituée d'un matériau solide tandis que le morceau de lèvre supérieur et le morceau de lèvre inférieur sont constitués d'un matériau souple.
